# EUROPEAN PATENT SPECIFICATION

(11) **EP 0 522 838 B1**
(45) Date of publication and mention of the grant of the patent: **16.04.1997**
(21) Application number: 92306262.4
(22) Date of filing: 08.07.1992
(51) Int. Cl.: E02B 3/06

(54) **Floating wave absorber**
Schwimmfähiger Wellenbrecher
Brise-lames flottant

(30) Priority: 08.07.1991 JP 263369/91; 31.07.1991 JP 88182/91 U; 30.08.1991 JP 93810/91 U; 19.03.1992 JP 112041/92
(43) Date of publication of application: 13.01.1993
(73) Proprietor: Niimura, Masateru, Tokyo (JP)
(72) Inventor: Niimura, Masateru, Tokyo (JP)
(74) Representative: Leale, Robin George

(56) References cited:
- FR-A- 2 116 131
- GB-A- 1 529 113
- GB-A- 2 204 080
- NL-A- 9 100 664
- US-A- 3 863 455
- PATENT ABSTRACTS OF JAPAN vol. 7, no. 159 (M-228)(1304) 13 July 1983 & JP-A-58 65 811 (HITACHI ZOSEN) 19 April 1983

## Description

This invention relates to a floating wave absorber that effectively attenuates waves, and more particularly a floating wave absorber that can effectively absorb waves of varied velocities and heights.

Means known in the prior art to attenuate or absorb waves include fixed type breakwaters and mounted type wave absorbing blocks. When a fixed type breakwater is constructed, a large rubble-mound, etc. is installed at the bottom of the water, on which a concrete breakwater is then constructed. This needs a vast amount of material, and the progress of the construction work greatly depends on weather conditions. Hence, the operation is expensive and time-consuming.

On the contrary, a mounted type wave absorber block is prefabricated at another location without necessarily being affected by weather, etc., and is then mounted in the water. Therefore, this type has advantages over the fixed type breakwater in terms of cost and time.

However, with mounted type wave absorber blocks it is necessary to estimate, according to the predicted nature of the waves, how many wave absorber blocks need to be installed in a given location. Consequently, it often occurs that an excess number of wave absorber blocks is provided. Furthermore, if the blocks encounter abnormally high waves in a repeated manner, due to a storm, the wave absorber blocks are sometimes washed away and lost. Hence, with mounted type wave absorber blocks, there is also a problem that maintenance costs and mounting costs are high.

US-A-3863455 and GB-A-1529113 each disclose a floating wave absorber comprising a structure arranged to float in the surface of a body of water and connected by traction members to respective anchors.

According to the present invention there is provided a floating wave absorber comprising a structure arranged to float in the surface of a body of water, said structure comprising two or more main wave-absorber bodies having their opposed end portions pivotally interconnected, and two traction members each having a first end connected to a free end portion of a respective one of said main wave-absorber bodies and a second end connected to a respective anchor, said wave-absorber bodies thereby being held in the surface of the water in a substantially inverted-V shaped arrangement.

In one form of the invention a supporting body formed as a cone is interposed between the top portions of the said main wave-absorber bodies.

According to another feature of the invention, a reflected-convection-preventive plate may be interposed between each said main wave-absorber body and the first end of the associated traction member.

Furthermore, according to another feature of the invention, the or each main wave-absorber body may have a flotation body formed by a synthetic resin pipe mounted thereon.

Thus, in a floating wave absorber according to the present invention, a main wave-absorber body floats in the surface of water and absorbs waves. Consequently, more effective wave absorbing is achieved in wave conditions of varying heights and velocities. In addition, when abnormally high waves come about because of a storm, the main wave-absorber bodies are submerged by virtue of the constant length of the said traction members, thereby avoiding the effect of the high waves while protecting the main wave-absorber bodies from damage.

Some embodiments of the invention will now be described by way of example and with reference to the accompanying drawings, in which:-
Fig. 1 is a vertical section view of a main wave-absorber body of a floating wave absorber according to the invention, to be described later;
Fig. 2 is a section view to a larger scale showing how a synthetic resin pipe may be provided in a partitioned chamber of the wave absorber body;
Fig. 3 is a partial enlarged view of a supporting float;
Fig. 4 is a partial plan view of a traction member of the floating wave absorber;
Fig. 5 is an enlarged partial plan view of said traction member, partially cut away;
Fig. 6 is an enlarged partial plan view of another embodiment of the traction member, partially cut away;
Fig. 7 is a partial plan view showing still another embodiment of the traction member, partially cut away;
Fig. 8 is a side view of a floating wave absorber of a first embodiment of the invention;
Fig. 9 is a side view depicting another operational state of the floating wave absorber of Fig. 9;
Fig. 10 is a side view showing another operational state of the floating wave absorber of Figs. 8 and 9;
Fig. 11 is a side view of a floating wave absorber of a second embodiment of the invention;
Fig. 12 is a side view of a floating wave absorber of a third embodiment; and
Fig. 13 is a side view illustrating another operational state of the floating wave absorber of Fig. 12.

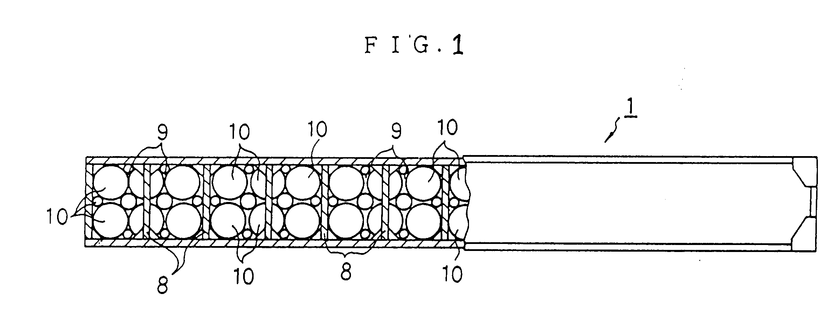

Referring first to Figs. 1 to 8, a main wave-absorber body 1 is made of a material or a construction that can float in a water surface and is formed as a hollow-box structure using a material which is highly water-proof or which is treated to be water-proof.

Inside the body 1 a plurality of chambers 9 are defined by intermediate partition plates 8. In each chamber 9, synthetic resin pipes 10 of different internal diameters are provided as buoyancy bodies.

The pipes 10 may be made of, for example, a low-cost synthetic resin material such as PVC. Because the specific gravity of the synthetic resin material itself is small enough for it to float on water, the main wave-absorber body 1 has a satisfactory buoyancy. In addition, since the resin is formed into pipes, a large volume of air is sealed inside the chambers 9. Consequently, the main wave-absorber body 1 has high buoyancy. Furthermore, because the floating body is composed of the synthetic resin pipes 10, it is highly resistive to corrosion by water. In addition, replacement of the body can be carried out easily.

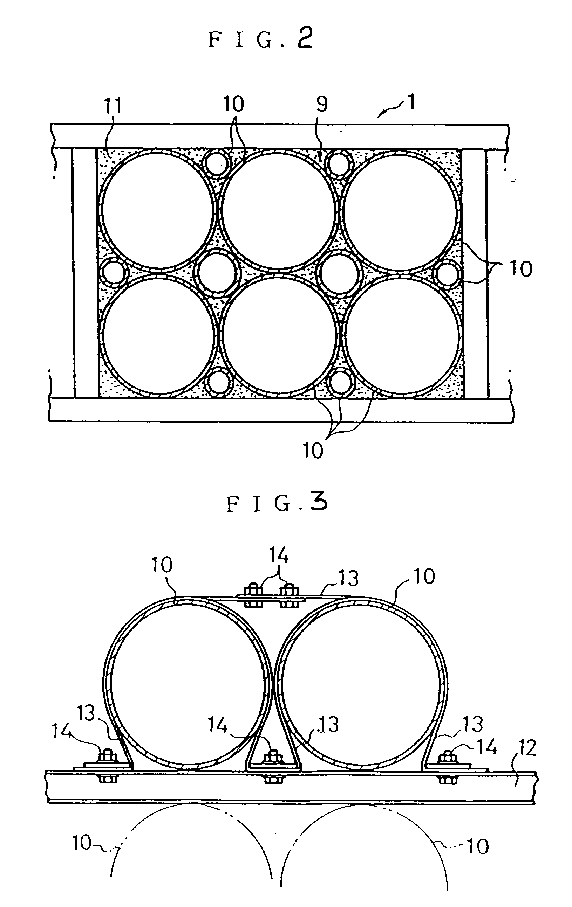

It is possible to provide foamed resin material 11 in the chambers 9, as shown in Fig. 2, so that air gaps created between the synthetic resin pipes 10 are filled up, thereby providing the body 1 with a still larger buoyancy.

In order to further increase the buoyancy of the body 1, a supporting float can also be provided as shown in Fig. 3. The supporting float comprises two synthetic resin pipes 10 wrapped around with a belt 13 and thereby fixed to a frame body portion 12 of the body 1, which is in the form of an H-shaped steel.

More explicitly, the belt 13 for fixing the pipes 10 on an upper part (or upper and lower parts) of the frame body portion 12 is in close contact in an intermediate portion thereof with the outer peripheries of the pipes 10, while the ends of the belt are fixed to the frame body portion 12 via bolts 14. Hence the pipes 10 are mounted so that they will not easily detach from the frame body portion 12. Employing such a fixing means for the external pipes 10 makes it easy to provide the main wave-absorber body 1 with satisfactory buoyancy, even if the buoyancy provided by the pipes 10 mounted inside the body 1 is insufficient. In addition, the removal and mounting of the external pipes 10 is very easy.

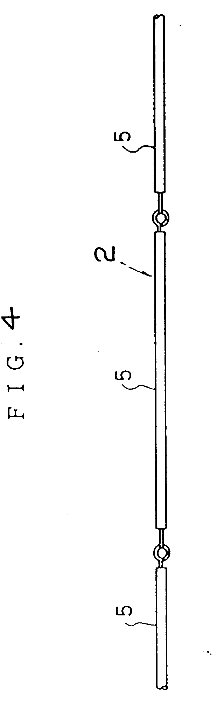

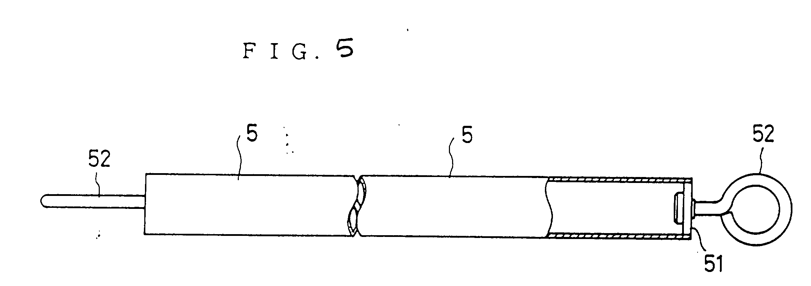

A traction member 2 is shown in Fig. 4, where it can be seen that it comprises sealed pipe bodies 5 in suitable lengths, connected in such manner that they can pivot relative to each other. The sealed pipe bodies 5 are shown again in Fig. 5, where it may be seen that a cap 51 is mounted at each end of each pipe and welded thereto to close the pipe so that its interior is hermetically sealed. A connection ring 52 is fixed to the cap 51.

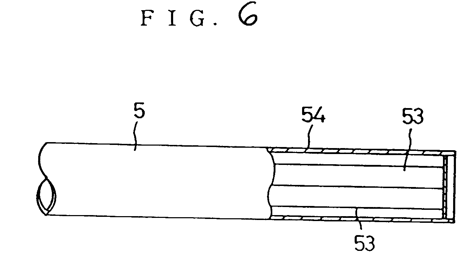

The sealed pipe bodies 5 are made of a high-tension material, with an epoxy base adhesive 54 (Fig. 6) coated on the inner surface thereof. Furthermore, as shown in Fig. 6, a plurality of high-tension members 53 are encased therein. The members 53 may, for example, be wire ropes, piano wires, alamide fibers, carbon fibers or other high-tension metal wires or synthetic resin base fibers.

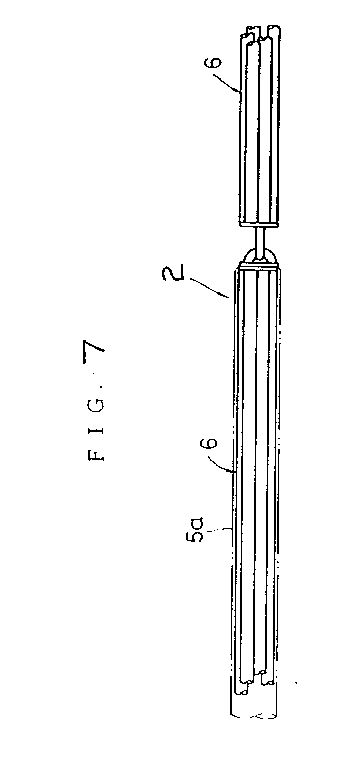

Moreover, the high-tension members 53 are coated or impregnated with, for example, an epoxy base adhesive 54 to integrate the members 53 altogether. At that time, the high-tension members 53 are also integrated with each sealed pipe body 5. In order to increase the tensile strength of the traction members 2, it is possible to bundle a suitable number of the sealed pipe bodies 5 into a bundle body 6 as shown in Fig. 7. It is then also possible to encase the bundle body 6 in a sealed pipe body 5A as shown by the ghost lines in Fig. 7.

Thus, the traction members 2 being made from hermetically sealed pipes, are themselves provided with buoyancy. Since they also have a defined length, handling thereof is much easier. Compared to a conventional traction member, e.g. a chain, production costs of the traction members 2 can be greatly reduced. In addition, the strength thereof can also be improved significantly. Moreover, the functions of the main wave-absorber body 1 can be advantageously improved without reducing the buoyancy of the body 1. Of course, it is nevertheless possible to use conventional traction members such as chains in place of the above described members 2.

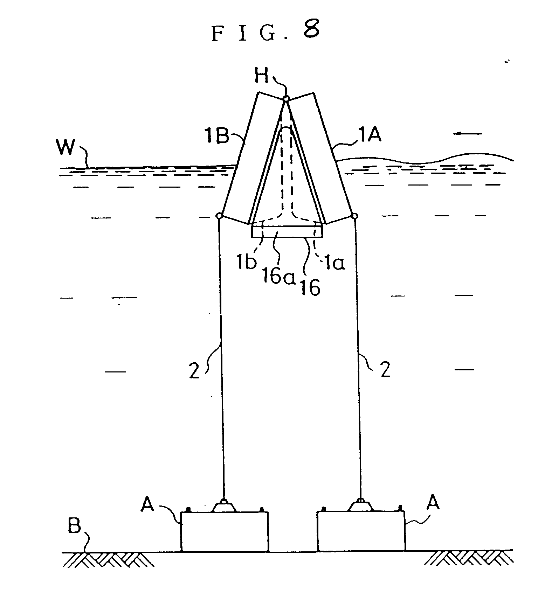

Fig. 8 illustrates a floating wave absorber of a first embodiment of the invention, which comprises a connected structure body which floats in a substantially inverted-V shape in the water surface W. A pair of main wave-absorber bodies 1A and 1B have their opposed end portions pivotally interconnected by way of a hinge H. Traction members 2 and 2 have first ends connected to the free end portions of respective ones of the bodies 1A and 1B and second ends connected to respective anchors A installed on the water bottom B. A supporting body 16 is disposed between the main wave-absorber bodies 1A and 1B.

Thus the bodies 1A and 1B float in the water surface W in an upright manner, in a substantially inverted-V shaped configuration, with the traction members 2 extending substantially vertically. As a result, it is possible to install the apparatus so that the spacing between the anchors A is so narrow as to approximate to the width of a fixed type breakwater.

The supporting body 16 is used as a supplementary member if the buoyancy of the main wave-absorber bodies 1A and 1B is insufficient. It is formed substantially as a cone and is constructed to be floatable in water, like the bodies 1A and 1B. It is arranged so that it will not turn over in the water surface W, by forming it with a heavier portion 16a at its lower end. Consequently, if the buoyancy of the bodies 1A and 1B is sufficiently large, the supporting body 16 need not be used. However, the body 16 also serves the function of maintaining the bodies 1A and 1B in their inverted-V shaped arrangement. Therefore, it is preferable that the body 16 is located between the bodies 1A and 1B.

Also, when the supporting body 16 is located between the main wave-absorber bodies 1A and 1B, it is possible to connect the lower ends of the bodies 1A and 1B to the body 16 by stopper members 1a and 1b, as shown in ghost lines in Fig. 8. It is possible to replace the members 1a and 1b with a wire rope or the like, to connect the supporting body 16 to the bodies 1A and 1B. Alternatively the top portion of the body 16 may be connected to the hinge H.

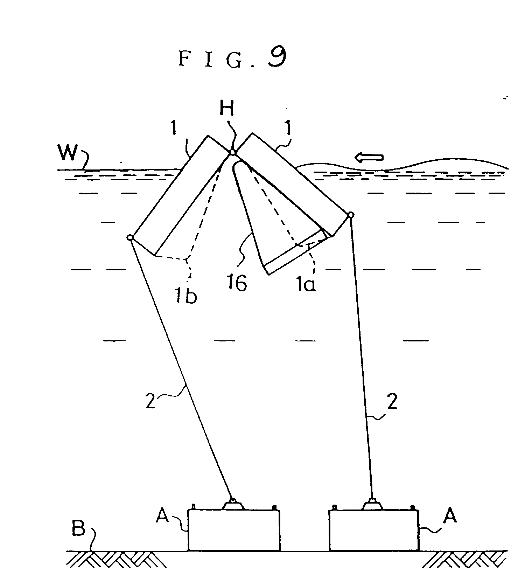

Fig. 9 shows how the bodies 1A and 1B receive the impact of waves. At that time, the bodies tilt in the downstream direction, to absorb the waves. At the same time, the supporting body 16 comes into close contact with the inside of the body 1A as shown in Fig. 9, while preventing the bodies 1A and 1B from submerging in the water. The supporting body 16 also functions to cause the bodies 1A and 1B to recover their original upright state, as shown in Fig. 8, as soon as possible.

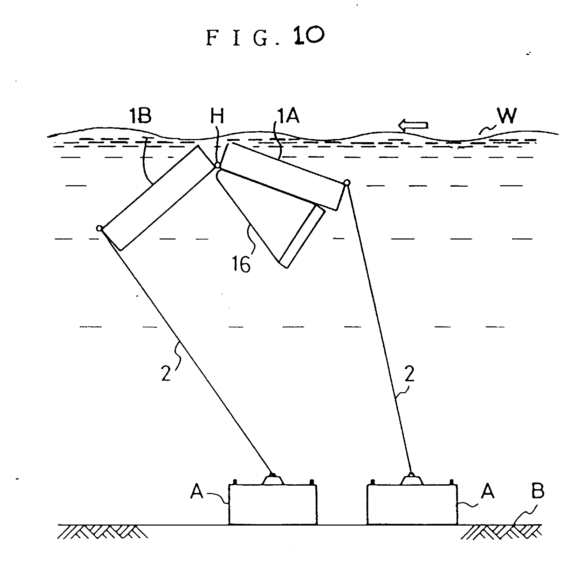

Fig. 10 shows the manner of operation of the floating wave absorber of Figs. 8 and 9 when the waves become abnormally high due to a storm. At such times the wave absorbers can no longer satisfactorily absorb the waves, and might be destroyed in extreme conditions, were it not that the main wave-absorber bodies 1A and 1B are able to submerge so as to avoid such adverse effects, since the length of the traction members 2 is suitably preset. It is also possible to submerge the absorber by winding the traction members 2 up and down by remotely activating a revolving motor (not illustrated).

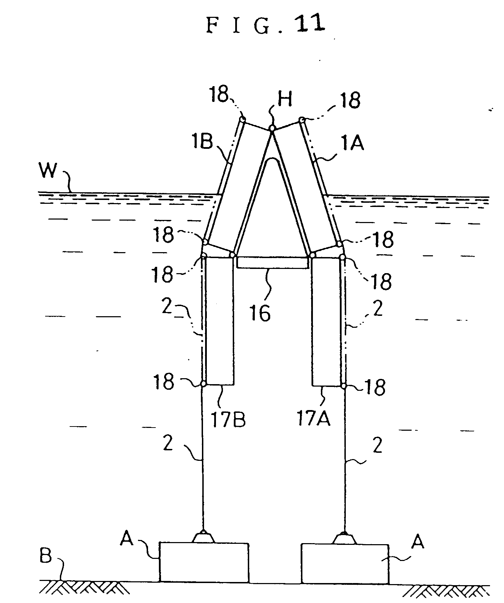

Fig. 11 illustrates a secdnd embodiment of the present invention, in which four main wave-absorber bodies 1A, 1B, 17A and 17B are interconnected to form a floating wave absorber of improved capability.

More explicitly, the opposed ends of the four bodies 1A, 1B, 17A and 17B are interconnected at hinges H. In addition, the traction members 2 are slidably engaged with rollers 18 disposed on one side surface of each main wave-absorber body 1A, 1B, 17A and 17B. The other ends of the traction members are connected to anchors A on the water bottom B.

Thus, in this embodiment, the main wave-absorber bodies 1A, 1B, 17A and 17B are connected with each other by extending one end portion of each traction member 2 over the rollers 18 disposed at the upper and lower outside ends of the bodies 1A, 1B, 17A and 17B. As a result, waves can be effectively absorbed in a wide range from the water surface W to substantially under the water.

In this embodiment, the main wave-absorber bodies 1A, 1B, 17A and 17B are arranged upright in an inverted-V shape by means of the hinges. Alternatively, however, three or more main wave-absorber bodies may be interconnected and then coupled together by a hinge H.

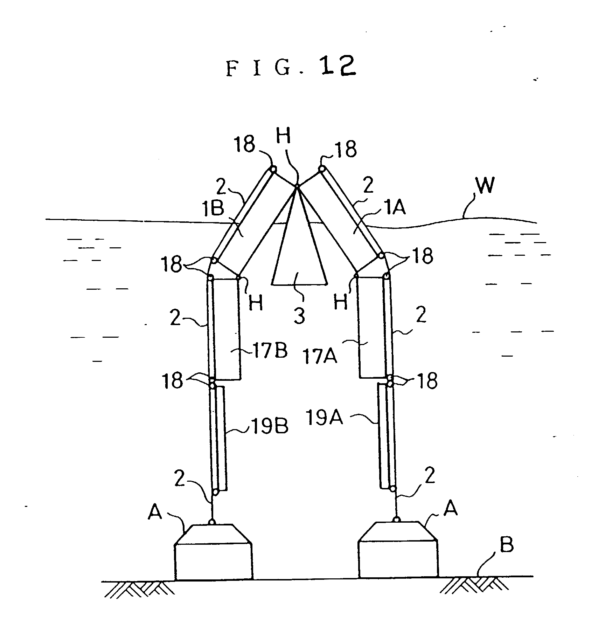

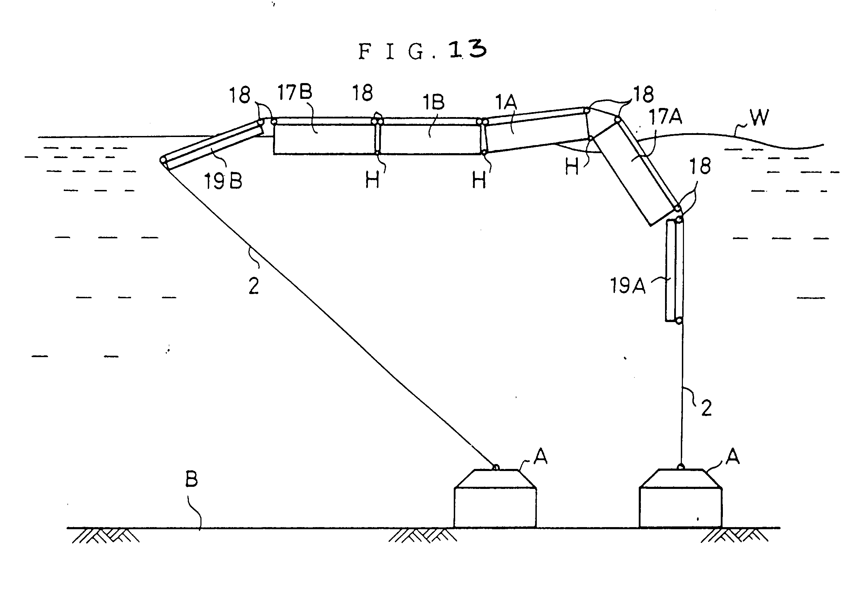

Figs. 12 and 13 show a third embodiment of the invention, in which reflected-convection-preventive plates 19 are connected to main wave-absorber bodies 1A, 1B, 17A and 17B arranged according to the second embodiment, via hinges H. In addition, one end of each traction member 2 is connected to each plate 19. Thus, waves can be absorbed in a broader range. In addition, when the equipment is installed, for instance, in a shoal or other shallow part, waves reflected from the water bottom, caused by waves being absorbed, are attenuated at the reflected-convection-preventive plates 19, thereby improving the wave-absorbing effect. Except for the above, the construction and operation of the third embodiment is the same as the second embodiment, and the same reference numerals are used where appropriate.

Thus, in accordance with embodiments of the present invention as described above, the main wave-absorber body is caused to float always in the surface of water by the wave forces. Therefore, more effective absorbtion of waves can be achieved. In addition, the effect of absorbing waves is adequately and quickly modified according to the water level and the sizes and velocities of the waves. In addition, even when waves are abnormally high because of a storm, etc., the adverse effect of the waves is eliminated automatically by submergence of the main wave-absorber body. In contrast conventional fixed type breakwaters or mounted type wave-absorber blocks often cause environmental change or pollution because water flow is blocked between the water surface and the anchor, or water flow characteristics in the vicinity may be changed.
However, with the present embodiments no such adverse effects are caused. In addition, installation work can be performed very easily and completed within a short time. Furthermore, installation costs can be greatly reduced.

Also, it is possible to reduce the installation width of the anchors that secure the main wave-absorber body, to the same width as a fixed type breakwater. Consequently ships can navigate safely near to the main wave-absorber body.

Furthermore, a supporting body formed as a cone may be interposed between the top portions of wave-absorber bodies arranged in an inverted-V shape. Thus, the main wave-absorber bodies can be made stable while floating in the water surface substantially in an inverted-V shape.

Moreover, reflected-convection-preventive plates may be connected to the main wave-absorber bodies. Thus, where the floating wave absorber is installed in a shoal and other shallow location, waves reflected from the water bottom, that are created by absorbed waves, can be attenuated effectively, thus improving the wave-absorbing effect significantly.

It will thus be seen that the present invention, at least in its preferred forms, provides a floating wave absorber apparatus that is advantageous in economic performance, extremely easily and quickly installed, free from risks of being washed away by the abnormally high waves of a storm, and can effectively absorb waves by means of a simple structure.

## Claims

1. A floating wave absorber comprising a structure arranged to float in the surface of a body of water (W), said structure comprising two or more main wave-absorber bodies (1A,1B) having their opposed end portions pivotally interconnected (H), and two traction members (2) each having a first end connected to a free end portion of a respective one of said main wave-absorber bodies and a second end connected to a respective anchor (A), said wave-absorber bodies thereby being held in the surface of the water in a substantially inverted-V shaped arrangement.

2. Apparatus as claimed in claim 1, further including a supporting body (16) formed as a cone interposed between the top portions of the said main wave-absorber bodies (1A,1B).

3. Apparatus as claimed in claim 1 or 2, wherein a reflected-convection-preventive plate (19) is interposed between each said main wave-absorber body and the first end of the associated traction member (2).

4. Apparatus as claimed in any preceding claim, wherein a flotation body in the form of at least one synthetic resin pipe (10) is mounted on the or each said main wave absorber body.

## Patentansprüche

1. Schwimmender Wellendämpfer umfassend einen Aufbau, der dazu eingerichtet ist, auf der Oberfläche einer Wassermasse (W) zu schwimmen, wobei der Aufbau zwei oder mehr Haupt-Wellendämpferkörper (1A, 1B) umfaßt, deren gegenüberliegende Endabschnitte gelenkig miteinander verbunden (H) sind, und zwei Zugelemente (2), von denen jedes ein mit einem freien Endabschnitt von jeweils einem der Haupt-Wellendämpferkörper verbundenes erstes Ende und ein mit einem zugehörigen Anker (A) verbundenes zweites Ende aufweist, so daß die Wellendämpferkörper an der Wasseroberfläche in einer im wesentlichen "umgekehrt V"-förmigen Anordnung gehalten sind.

2. Vorrichtung nach Anspruch 1, ferner umfassend einen Stützkörper (16), der als Kegel ausgebildet zwischen den oberen Abschnitten der Haupt-Wellendämpferkörper (1A, 1B) angeordnet ist.

3. Vorrichtung nach Anspruch 1 oder 2, wobei zwischen jedem Haupt-Wellendämpferkörper und dem ersten Ende des zugeordneten Zugelementes (2) eine reflektierter Konvektion vorbeugende Platte (19) angeordnet ist.

4. Vorrichtung nach einem der vorhergehenden Ansprüche, wobei ein Schwimmkörper in Form von wenigstens einem Kunstharzrohr (10) an dem oder an jedem Haupt-Wellendämpferkörper angebracht ist.

## Revendications

1. Brise-lames flottant comprenant une structure adaptée pour flotter dans la surface d'une masse d'eau (W), ladite structure comprenant au moins deux corps (1A, 1B) brise-lames principaux ayant leurs parties d'extrémités opposées interconnectées par pivot (H), et deux organes de traction (2) ayant chacun une première extrémité reliée à une partie d'extrémité libre de l'un desdits corps brise-lames principaux respectif et une seconde extrémité reliée à une ancre (A) respective, lesdits corps brise-lames étant ainsi maintenus dans la surface de l'eau dans une disposition présentant un profil sensiblement en V retourné.

2. Appareil selon la revendication 1, incluant de plus un corps (16) formant support constitué sous la forme d'un cône interposé entre les parties de sommet desdits corps (1A, 1B) brise-lames principaux.

3. Appareil selon la revendication 1 ou 2, dans lequel une plaque (19) de prévention de convexion réfléchie est interposée entre chaque corps brise-lames principal et la première extrémité de l'organe de traction (2) associé.

4. Appareil selon l'une quelconque des revendications précédentes, dans lequel un corps de flottaison sous la forme d'au moins un tube (10) en résine synthétique est monté sur le ou chaque corps brise-lames principal.
